Europäisches Patentamt

European Patent Office

Office européen des brevets

(11) Veröffentlichungsnummer: **0 207 280**
**B1**

(19)

(12) # EUROPÄISCHE PATENTSCHRIFT

(45) Veröffentlichungstag der Patentschrift: **19.12.90**

(51) Int. Cl.⁵: **B 60 L 7/28**

(21) Anmeldenummer: **86107034.0**

(22) Anmeldetag: **23.05.86**

(54) **Einrichtung zur Energieversorgung eines Reisezugwagens mit Wirbelstrombremsen.**

(30) Priorität: **05.06.85 DE 3520201**

(43) Veröffentlichungstag der Anmeldung:
**07.01.87 Patentblatt 87/02**

(45) Bekanntmachung des Hinweises auf die
Patenterteilung:
**19.12.90 Patentblatt 90/51**

(84) Benannte Vertragsstaaten:
**AT FR IT NL**

(56) Entgegenhaltungen:
**DE-A-2 124 390**
**DE-A-2 613 553**
**DE-A-3 108 732**

(73) Patentinhaber: **Fried. Krupp Gesellschaft mit
beschränkter Haftung
Altendorfer Strasse 103
D-4300 Essen 1 (DE)**

(72) Erfinder: **Seeger, Herbert, Dipl.-Ing.
Bergische Strasse 32
D-4320 Hattingen 16 (DE)**
**Der weitere Erfinder hat auf seine Nennung
verzichtet**

EP 0 207 280 B1

**Beschreibung**

Die Erfindung betrifft eine Einrichtung nach dem Oberbegriff des Anspruchs 1 und des Anspruchs 3. Dabei kann der Transformator für den Fall, daß die Zugsammelschiene Wechselstrom führt, mit ihrer Primärwicklung unmittelbar und für den Fall, daß die Zugsammelschiene Gleichstrom führt, über einen Umformer oder, wie dies in der DE—AS 21 24 390 beschrieben ist, über einen Wechselrichter an die Zugsammelschiene angeschlossen sein. Dazu kann der Transformator zur Berücksrichtigung unterschiedlicher Spannungen an der Zugsammelschiene, wie ebenfalls aus der DE—AS 21 24 390 bekannt, primärseitig mit Anzapfungen ausgerüstet sein.

Es ist ein Hochgeschwindigkeitszug bekannt, bei dem die zwischen zwei Triebköpfen gekuppelten Mittelwagen für Reisende außer durch Scheibenbremsen durch Wirbelstrombremsen gebremst werden. Die Wirbelstrombremsen wirken verschleißfrei und reibwertunabhängig direkt vom Fahrzeugmagneten auf die Schiene über einen Luftspalt mittels elektromagnetisch erzeugter Wirbelströme. Zum Aufbau des Erregerfeldes der Wirbelstrombremsen wird elektrische Energie in Form von Gleichstrom benötigt. Dabei wird die Stärke des Erregerstromes entsprechend der jeweils benötigten Bremskraft von der Bremseinrichtung gesteuert.

Bei dem bekannten Hochgeschwindigkeitszug werden die Erregerwicklungen der Wirbelstrombremsen jedes Drehgestells durch einen separaten, von der Zugsammelschiene gespeisten Transformator und eine mit Phasenanschnitt arbeitende gesteuerte Gleichrichteranordnung gespeist. Diese Einrichtungen weisen nicht nur ein erhebliches Transportgewicht auf, das jedesmal mit beschleunigt und abgebremst werden muß, es sind auch entsprechend hohe Investitionen zu deren Anschaffung notwendig. Zudem besteht bei der bekannten Einrichtung die Gefahr, daß Oberwellen auf die Zugsammelschiene gelangen, wodurch es zu Signalstörungen kommen kann. Die durch den Phasenanschnitt bedingte Phasenverschiebung führt zudem zu einer Scheinleistung, die die Zugsammelschiene zusätzlich belastet.

Aus der DE—A—31 08 732 ist weiterhin eine Schaltanordnung zur Energieversorgung einer Wirbelstrombremse bei Kraftfahrzeugen bekannt. Auch bei dieser bekannten Anordnung ist für die Energieversorgung der Wirbelstrombremse ein eigener Einrichtungsteil vorgesehen, der als elektrischer Leistungsschalter, bestehend aus mindestens einem Sägezahngenerator, einem Leistungsschalter, einem Komparator, einem Ansteuertreiber und einem Leistungsschaltglied, ausgebildet ist.

Der Erfindung liegt die Aufgabe zugrunde, den Aufwand für die für die Versorgung der Erregerspulen der Wirbelstrombremsen mit Gleichstrom benötigten Einrichtungen unter Gewährung einer einwandfreien Funktion reduzieren.

Diese Aufgabe wird einerseits durch die im kennzeichnenden Teil des Patentanspruchs 1 angegebenen Merkmale und zum anderen durch die im kennzeichnenden Teil des Anspruchs 3 angegebenen Merkmale gelöst. Da in dem Reisezugwagen ohnehin ein in seiner Leistung regelbarer Drehstromerzeuger vorhanden ist, bedarf es, soweit die Erregerwicklungen der Wirbelstrombremsen an den Drehstromausgang des Drehstromerzeugers angeschlossen sind, zur Versorgung der Erregerwicklungen der Wirbelstromsen mit Gleichstrom lediglich noch eines Gleichrichters und einer Schaltvorrichtung, die bei einer Ausführung nach Anspruch 2 in einer einzigen gesteuerten Gleichrichteranordnung zusammengefaßt sei können, sowie einer steuertechnischen Verbindung von der Bremssteuereinrichtung zum Drehstromerzeuger. Dabei erfolgt die Versorgung der Erregerspulen oberwellenfrei.

Nach Anspruch 3 ist vorgesehen, den Drehstromerzeuger aus einem Chopper und einem von diesem gespeisten Drehrichter aufzubaren und die Erregerspulen der Wirbelstrombremsen unmittelbar an den in seiner Leistung regelbaren Chopper über eine Schaltvorrichtung anzuschließen. Da diesen ohnehin eine Gleichspannung abgibt, ist das Vorsehen eines separaten Gleichrichters in diesem Fall entbehrlich.

Vorteilhafte Weiterbildungen der Erfindung sind in den Unteransprüchen 4 bis 6 beschrieben. So ist es mit einer Ausführung der Einrichtung nach Anspruch 4 möglich, die von dem Drehstromerzeuger abgegebene Leistung den Erregerspulen der Wirbelstrombremsen ganz, zumindest aber weitgehend zur Verfügung zu stellen, ohne die Zugsammelschiene unzulässig zu überlasten.

Die Verbindung der Erregerwicklungen mit der Batterie sichert auch im Falle des Ausfalls der Energiezufuhr durch die Zugsammelschiene ein sicheres Bremsen.

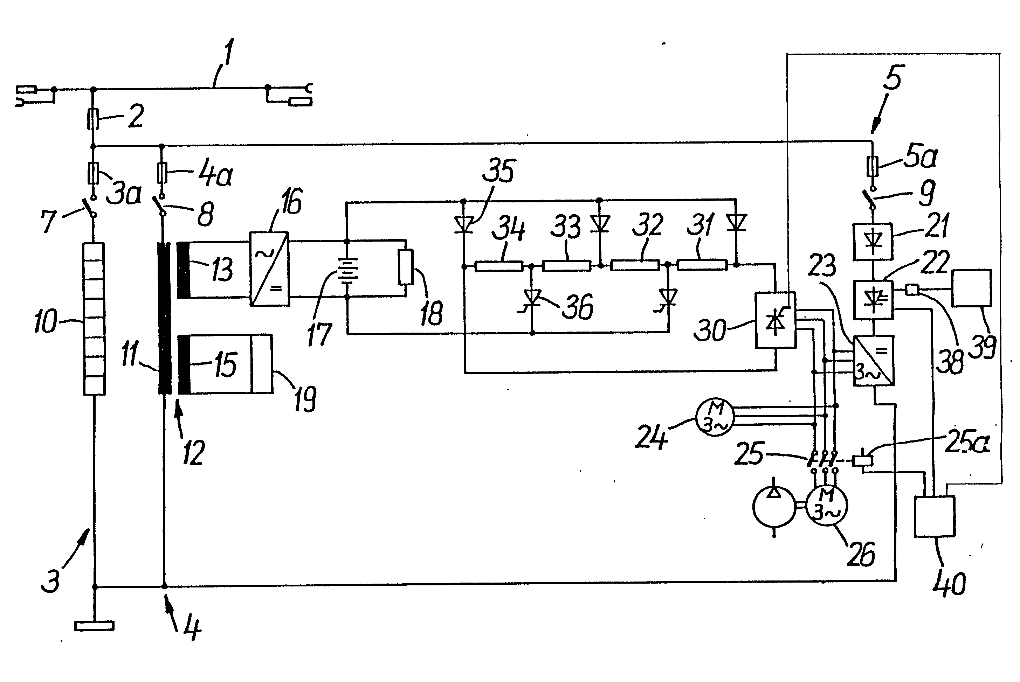

Ein Ausführungsbeispiel der Erfindung ist anhand der Zeichnung im folgenden näher erläutert.

Die Energie für die Verbraucher eines Reisezugwagens wird der durch den Zug hindurchgelegten Heizleitung oder Zugsammelschiene entnommen. Die Zugsammelschiene wird über den Fahrdrahtbügel des Triebfahrzeugs an das jeweilige Bahnnetz angeschlosen, und zwar an Gleichstromnetze von 1,5 kV und 3 kV unmittelbar und an Wechselspannungsnetze von 15 kV 16 2/3 Hz und 25 kV 50 Hz über einen Transformator. Die Zugsammelschiene weist somit je nach Fahr system Gleichspannungen von 1,5 bzw. 3 kV oder Wechselspannungen von 1 bzw. 1,5 kV bei 16 2/3 bzw. 50 Hz auf. Die in der Zeichnung dargestellte Einrichtung eignet sich zur Versorgung mit Energie aus einer mit Wechselstrom gespeisten Zugsammelschiene.

Die Energie wird der Zugsammelschiene 1 über eine Hauptsicherung 2 entnommen. Die Analge hat drei parallelgeschaltete Stromzweige 3, 4, 5, die jeweils eine eigene Sicherung 3a, 4a, 5a, aufweisen und jeweils durch einen Trennschalter 7, 8, 9, an die Zugsammelschiene angeschlossen werden.

Mit dem ersten durch den Trennschalter 7 schaltbaren Stromzweig 3 wird die Heizleitung 10 mit Energie versorgt.

Der zweite durch den Schalter 8 betätigbare Stromzweig 4 enthält die Primärwicklung 11 eines Transformators 12, der zwei Sekundärwicklungen 13, 15 aufweist, von denen die eine (13) mit dem Eingang eines Batterieladegerätes 16 verbunden ist, aus dem die Batterie 17 und die Gleichstromverbraucher 18 des Bordnetzes des Reisezugwagens, wie z.B. die Beleuchtungseinrichtungen, mit Gleichstrom versorgt werden. Die Sekundärwicklung 15 dient zur Versorgung der bordseitigen Wechselstromverbraucher 19.

Der dritte durch den Schalter 9 betätigbare Stromzweig 5 enthält ein Gleichrichtergerät bzw. eine Gleichrichteranordnung 21, die gleichstromseitig mit einem sog. Chopper oder Gleichstromsteller 22 verbunden ist, der wiederum mit einem (nicht gesondert dargestellten) Thyristor ausgerüstet ist. Von der von dem Gleichrichter 21 gleichgerichteten Spannung können von dem taktweise zünd- und löschbaren Thyristor des Chopper 22 einzelne Spannungssegmente durchgelassen werden, die wiederum durch eine (nicht gesondert dargestellte) Glättungseinrichtung zu einer geglätteten Gleichspannung entsprechend kleinerer Spannung umgeformt werden. Dabei ergibt sich die Größe der Gleichspannung am Ausgang des Chopper 22 im Verhältnis zu der Gleichspannung am Ausgang des Gleichrichters 21 durch das durch die Zeitdauer zwischen Löschen und Zünden und die Taktzeig gebildete Verhältnis, das zwischen 0 und 1 variieren kann.

Die Anschlüsse des Chopper 22 für die regelbare Gleichspannung sind mit den entsprechenden Gleichstromanschlüssen eines Drehrichters 23 verbunden. Die für eine maximale Spannung von 380 Volt ausgelegten Drehstromanschlüsse des Drehrichters 23 sind einerseit mit einem Lüftermotor 24 eines Kondensatorlüfters der Klimaanlage des Reisezugswagens und andererseits über ein Schütz 25 mit dem Kompressormotor 26 zur Kälteerzeugung verbunden. Der Drehstromausgang des Drehrichters 23 ist außerdem mit einem steuerbaren Gleichrichter 30 verbunden, der gleichstromseitig mit einer Nennspannung von 440 Volt in einen Stromkreis mit vier in Reihe hintereinander geschalteten Erregerwicklungen 31 bis 34 von Wirbelstormbremsen mit 110 Volt Erregerspannung integriert ist. Durch die Reihenspaltung der Erregerspulen können die Ströme kleingehalten werden, so daß keine weiteren Energieumformungsglieder benötigt werden.

Für die Erregerspulen 31 ... 34 besteht außerdem ein an die Batterie 17 angeschlossener schaltbarer Stromkreis. Die an den Pulspol der Batterie 17 angeschlossene Leitung weist drei jeweils eine Gleichrichterdiode 35 aufweisende, parallele Stromzweige auf, von denen die beiden äußeren an die Enden der Reihe der Erregerwicklungen 31 ... 34 angeschlossen sind und der dritte, mittlere Stromzweig zwischen die beiden mittleren Spulen 32, 33 geschaltet ist. Die Rückführung zur Batterie 17 erfolgt über zwei parallele mit einem Thyristor 36 ausgerüstet Stromzweige, die jeweils zwischen die erste und zweite bzw. dritte und vierte Erregerspule 31, 32 bzw. 33, 34 geschaltet sind.

Der Chopper 22 ist über eine mit einem Schaltorgan 38 versehene Impuls- oder Steuerleitung mit der Steuereinrichtung 39 der Klimaanlage des Reisezugwagens verbunden. Außerdem sind der Chopper 22 und der Magnet 25a des Schützes 25 sowie der Gleichrichter 30 über je eine Impuls- oder Steuerleitung der Bremssteuereinrichtung 40 verbunden.

Während des Bremsvorgangs werden von der Bremssteuereinrichtung Impulse abgegeben, die

(a) den Magneten 25a des Schützes 25 veranlassen, den Motor 26 von dem Drehrichter 23 zu trennen,

(b) die Verbindung zwischen dem Steuergerät 39 der Klimaanlage und dem Chopper 22 über die Schaltanordnung 38 unterbrechen und

(c) den Chopper 22 auf die erforderliche Leistung zur Versorgung der Erregerspulen 31 ... 34 mit Gleichstrom zu regeln.

Während des Bremsvorgangs wird dem Drehrichter 23 somit nur noch von dem leistungsschwachen Lüftermotor 24 und den Erregerspulen 31 ... 34 Leistung entnommen, dagegen nicht mehr von dem leistungsstarken Kompressormotor 26.

In Abwandlung des beschriebenen Ausführungsbeispiels kann der von dem Motor 26 angetriebene Kompressor auch drucklos gemacht werden, so daß dem Motor 26 keine mechanische Leistung abverlangt wird.

Weiterhin können die Erregerspulen 31 ... 34 in Abwandlung des beschriebenen Ausführungsbeispiels unmittelbar an den Chopper 22 angeschlossen werden, da dieser bereits eine geregelte Gleichspannung liefert.

**Patentansprüche**

1. Einrichtung zur Energieversorgung von bordseitigen Gleichstrom- und Drehstromverbrauchern (18; 24, 26) eines mit Wirbelstrombremsen versehenen Reisezugwagens mit einem primärseitig ggf. über einen Wechselrichter bzw. einen Umformer an die Zugsammelschiene (1) angeschlossenen Transformator (11), wobei die Gleichstromverbraucher (18) einschließlich einer Batterie (17) über ein Batterieladegerät (16) von einer Sekundärwicklung (13) des Transformators (11) gespeist werden und die Drehstromverbraucher (26, 24) von einem an die Zugsammelschiene (1) angeschlossenen Drehstromerzeuger (22, 23) mit regelbarer Ausgangsspannung gespeist werden, dadurch gekennzeichnet, daß die Erregerwicklungen (31—34) der Wirbelstrombremsen über einen Gleichrichter und eine von der Bremsteuereinrichtung (40) betätigbare Schaltvorrichtung (30) an den Drehstromerzeuger (22, 23) angeschlossen sind, wobei die Leistung des Drehstromerzeugers (22, 23) von der Bremsteuereinrichtung (40) steuerbar ist.

2. Einrichtung nach Anspruch 1, dadurch gekennzeichnet, daß der Gleichrichter und die Schaltvorrichtung (30) als gesteuerter Gleichrichter ausgebildet sind.

3. Einrichtung zur Energieversorgung von bordseitigen Gleichstrom- und Drehstromverbrauchern (18; 24, 26) eines mit Wirbelstrombremsen versehenen Reisezugwagens mit einem primärseitig ggf. über einen Wechselrichter bzw. einen Umformer an die Zugsammelschiene (1) angeschlossenen Transformator (11), wobei die Gleichstromverbraucher (18) einschließlich einer Batterie (17) über ein Batterieladegerät (16 von einer Sekundärwicklung (13) des Transformators (11) gespeist werden und die Drehstromverbraucher (26, 24) von einem an die Zugsammelschiene (1) angeschlossenen Drehstromerzeuger (22, 23) mit regelbarer Ausgangsspannung gespeist werden, dadurch gekennzeichnet, daß der Drehstromerzeuger (22, 23) aus einem Chopper (22) und einem von diesem gepeisten Drehrichter (23) besteht und daß die Erregerwicklungen (31—34) der Wirbelstrombremsen über eine von der Bremsteuereinrichtung (40) betätigbare Schaltvorrichtung (30) an den Ausgang des Choppers (22) angeschlossen sind, wobei die Leistung des Choppers (22) von der Bremsteuereinrichtung (40) steuerbar ist.

4. Einrichtung nach Anspruch 1 oder 3, dadurch gekennzeichnet, daß der Drehstromerzeuger (22, 23) zumindest mit einem Teil (26) der Drehstromverbraucher (24, 26) über eine von der Bremssteuereinrichtung (40) betätigbare Schaltanordnung (25, 25a) zum Abschalten dieses Teils (26) beim Bremsvorgang verbunden ist.

5. Einrichtung nach Anspruch 1, 3 oder 4, dadurch gekennzeichnet, daß die Steuerleitung zwischen der Klimaanlage (39) und dem Drehstromerzeuger (23) durch die Signale der Bremseinrichtung (40) unterbrochen wird.

6. Einrichtung nach Anspruch 1 oder 3, dadurch gekennzeichnet, daß die Erregerwicklungen (31 ... 34) über einen schaltbaren Stromkreis (35, 36) mit der Batterie (17) verbunden sind.

## Revendications

1. Appareil pour l'alimentation en énergie de consommateurs de courant continu et alternatif embarqués (18; 24, 26) d'une voiture de voyageurs munie de freins à courant de Foucault, comportant un transformateur (11) raccordé à la barre omnibus du train (1) côté primaire le cas échéant par l'intermédiaire d'un onduleur ou d'un convertisseur triphasé, les consommateurs de courant continu (18), y compris une batterie (17), étant alimentés par un enroulement secondaire (13) du transformateur (11) par l'intermédiaire d'un chargeur de batterie (16) et les consommateurs de courant alternatifs (24, 26) étant alimentés par un générateur de courant alternatif (22, 23) raccordé à la barre omnibus du train (1) et comportant un tension de sortie réglable, caractérisé en ce que les bobinages d'excitation (31—34) des freins à courant de Foucault sont raccordés au générateur de courant alternatif (22, 23), par l'intermédiaire d'un redresseur et d'un dispositif de coupure de courant (30) pouvant être actionné par le dispositif de commande de frein (40), étant entendu que la puissance du générateur de courant alternatif (22, 23) peut être commandé par le dispositif de commande de frein (40).

2. Appareil suivant la revendication 1, caractérisé en ce que le redresseur et le dispositif de coupure de courant (30) sont réalisés sous la forme de redresseurs commandés.

3. Appareil pour l'alimentation en énergie de consommateurs de courant continu et alternatif embarqués (18; 24, 26) d'une voiture de voyageurs munie de freins à courant de Foucault, comportant un transformateur (11) raccordé à la barre omnibus du train (1) côté primaire le cas échéant par l'intermédiaire d'un onduleur ou d'un convertisseur triphasé, les consommateurs de courant continu (18), y compris une batterie (17), étant alimentés par un enroulement secondaire (13) du transformateur (11) par l'intermédiaire d'un chargeur de batterie (16) et les consommateurs de courant alternatif (24, 26) étant alimentés par un générateur de courant alternatif (22, 23) raccordé à la barre omnibus du train (1) et comportant un tension de sortie réglable, caractérisé en ce que le générateur de courant alternatif (22, 23) est constitué d'un vibreur (22) et d'un convertisseur triphasé (23) alimenté par ce dernier, et en ce que les bobinages d'excitation (31—34) des freins à courant de Foucault sont raccordés à la sortie du vibreur (22) par l'intermédiaire d'un dispositif de coupure de courant (30) pouvant être actionné par le dispositif de commande de frein (40), étant entendu que la puissance du vibreur (22) peut être commandée par le dispositif de commande de frein (40).

4. Appareil suivant la revendication 1 ou la revendication 3, caractérisé en ce que le générateur de courant alternatif (22, 23) est raccordé avec au moins une partie (26) des consommateurs de courant alternatif (24, 26) par l'intermédiaire d'un dispositif de coupure de courant (25, 25a) pouvant être actionné par le dispositif de commande de frein (40), pour mettre hors circuit cette partie (26) lors de la manoeuvre de freinage.

5. Appareil suivant les revendications 1, 3 ou 4, caractérisé en ce que le conducteur de commande entre l'installation de climatisation (39) et le générateur de courant alternatif (23) est interrompu au moyen des signaux du dispositif de commande de frein (40).

6. Appareil suivant la revendication 1 ou la revendication 3, caractérisé en ce que les bobinages d'excitation (31 ... 34) sont raccordés avec la batterie (17) par l'intermédiaire d'un circuit électrique (35, 36) pouvant être coupé.

## Claims

1. A device for supplying power to on-board direct current and rotary current loads (18; 24, 26) of a railway carriage equipped with eddy current brakes, having a transformer (11) connected on the primary side if necessary via an inverter or a converter to the train bus bar (1), the direct current loads (18) including a battery (17) being supplied via a battery-charging apparatus (16) from a secondary winding (13) of the transformer (11) and the rotary current loads (26, 24) being supplied with controllable output voltage from a rotary current generator (22, 23) connected to the train bus bar (1), characterized in that the exciting windings (31—34) of the eddy current brakes are connected via a rectifier and a switch device (30) actuable by the brake control device (40) to the rotary current generator (22, 23), the output of the rotary current generator (22, 23) being controllable by the brake control device (40).

2. A device according to claim 1, characterized in that the rectifier and the switch device (30) take the form of controlled rectifiers.

3. A device for supplying power to on-board direct current and rotary current loads (18; 24, 26) of a railway carriage equipped with eddy current brakes, having a transformer (11) connected on the primary side if necessary via an inverter or a converter to the train bus bar (1), the direct current loads (18) including a battery (17) being supplied via battery-charging apparatus (16) from a secondary winding (13) of the transformer (11) and the rotary current loads (26, 24) being supplied with controllable output voltage from a rotary current generator (22, 23) connected to the train bus bar (1), characterized in that the rotary current generator (22, 23) consists of a chopper (22) and a three phase inverter (23) supplied thereby, and the exciting windings (31—34) of the eddy current brakes are connected via a switch device (30) actuable by the brake control device (40) to the output of the chopper (22), the output of the chopper (23) being controllable by the brake control device (40).

4. A device according to claims 1 or 3, characterized in that the rotary current generator (22, 23) is connected to at least a part (26) of the rotary current loads (24, 26) via a switch arrangement (25, 25a) actuable by the brake control device (40) to switch off said parts (26) when the brakes are applied.

5. A device according to claims 3 or 4, characterized in that the control cable is interrupted between the air-conditioning installation (39) and the rotary current generator (23) by the signals of the brake control device (40).

6. A device according to claims 1 or 3, characterized in that the exciting windings (31—34) are connected via a switchable circuit (35, 36) to the battery (17).

1